# EUROPEAN PATENT SPECIFICATION

(11) **EP 2 340 946 B1**
(45) Date of publication and mention of the grant of the patent: **21.11.2012**
(21) Application number: 10195834.6
(22) Date of filing: 20.12.2010
(51) Int. Cl.: B60C 1/00, B60C 13/00, B60C 15/00, C08L 9/00, C08L 21/00, C08K 5/09, C08K 5/103

(54) **Pneumatic tire with rubber component containing epoxidized palm oil**
Luftreifen mit Gummikomponente mit epoxidiertem Palmöl
Pneu avec composant en caoutchouc contenant de l'huile de palme époxyde

(30) Priority: 22.12.2009 US 644052
(43) Date of publication of application: 06.07.2011
(73) Proprietor: The Goodyear Tire & Rubber Company, Akron, OH 44316-0001 (US)
(72) Inventor: Weydert, Marc, L-8028, Strassen (LU); Frantzen, Andreas, D-54292, Trier (DE); Kunysz, Patrick Wladislaw Stanislas, 6700, Arlon (BE)
(74) Representative: Kutsch, Bernd

(56) References cited:
- EP-A1- 1 911 608
- EP-A1- 2 184 186
- JP-A- 2007 099 892
- KR-A- 20090 116 171
- US-A1- 2007 142 518

## Description

### Background

Vulcanization, or curing, is a process where elastomers, natural and/or synthetic, are mixed with various materials which will cause the elastomer to undergo crosslinking upon application of heat. These materials are conventionally compounded with the elastomer to help improve the elastomer's cured physical properties, e.g., tensile strength and temperature sensitivity. Vulcanization and the resulting improved properties may be obtained by reacting the raw elastomer with sulfur in the presence of other cure activators. Fatty acids, i.e., oleic and stearic, have been commonly used as activators in sulfur vulcanization of diene rubbers in the presence of zinc oxide and an accelerator. During the early stages of vulcanization, the zinc carboxylate (the reaction product of zinc oxide and fatty acid) reacts with the accelerator to form a complex. A nucleophilic attack by the complex on the ring of orthorhombic sulfur results in the formation of a zinc perthiomercaptide complex. This zinc perthiomercaptide complex is believed to be the sulfurating agent responsible for the crosslinking of the elastomer's chains. The role of the fatty acid, i.e., oleic or stearic, is believed to increase the solubility of zinc oxide and subsequent reactivity of the zinc perthiomercaptide complex. Stearic acid is commonly used for vulcanization; however, the stearic acid suffers from the disadvantage of a high bloom rate, consequently causing some loss of adhesion properties. In particular, stearic acid bloom results in poor tack retention in tire components such as beads, apexes, and sidewall veneers stored for later tire building. Especially problematic is loss of tack in such components of large industrial and off-the-road tires. Therefore, there exists a need for improved tack retention in tire components.

EP-A- 2 184 186 describes a tire comprising an apex wherein the apex comprises a rubber composition comprising epoxidized palm oil. The use of epoxidized palm oil in diene-based rubber compositions for tires is also described in JP-A- 2007-099892 and KR-A- 2009-0116171.

US-A- 2007/142518 describes the use of epoxidized soybean oil in diene-based rubber compositions for tire components like an apex or a bead.

EP-A- 1 911 608 describes a tire with a sidewall insert wherein the sidewall insert comprises a vulcanization modifier.

### Summary

The present invention is directed to a pneumatic tire in accordance with claim 1.
Dependent claims refer to preferred embodiments of the invention.

### Description

There is disclosed a pneumatic tire comprising a bead, the bead comprising a rubber composition, the rubber composition comprising at least one diene based elastomer; an epoxidized palm oil; wherein the rubber composition comprises less than 1 phr of stearic acid.

The rubber composition includes an epoxidized palm oil. The epoxidized palm oil is derived from a palm oil. Typical palm oils comprise 43 to 47 percent by weight of palmitic acid, 38 to 42 percent by weight of oleic acid, 8 to 12 percent by weight of linoleic acid, 3 to 5 percent by weight of stearic acid, and from 0.5 to 1.5 percent by weight of myristic acid. Epoxidized palm oil is typically produced by epoxidation of palm oil, following methods such as those disclosed for example in GB-A-1,382,853 or JP-A- 11-158486. Typically, palm oil is epoxidized such that a fraction of the double bonds in the palm oil fatty acids are converted to epoxide (i.e., oxirane) functional groups. In one embodiment, from 2.4 to 3.6 percent of available double bonds in the palm oil fatty acids are converted to epoxide groups in the epoxidized palm oil. In one embodiment, from 2.6 to 3.4 percent of available double bonds in the palm oil fatty acids are converted to epoxide groups in the epoxidized palm oil. Suitable epoxidized palm oil is available commercially as Ultra-Flex™ EPO from Performance Additives.

Use of epoxidized palm oil in the rubber composition makes use of other sources of fatty acid unnecessary. In particular, the usual addition of stearic acid as a cure aid is not required; the usual bloom experience with stearic acid and its concomitant effect on tack of the rubber component is avoided. A small amount of stearic acid is nontheless included in the rubber composition due to its presence in the epoxidized palm oil. In one embodiment, the rubber composition comprises less than 1 phr of stearic acid. In one embodiment, the rubber composition comprises less than 0.75 phr of stearic acid.

The rubber composition includes at least one additional diene based rubber. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are natural rubber, synthetic polyisoprene, polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/ butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

In one embodiment, cis 1,4-polybutadiene rubber (BR) is used. Suitable polybutadiene rubbers may be prepared, for example, by organic solution polymerization of 1,3-butadiene. The BR may be conveniently characterized, for example, by having at least a 90 percent cis 1,4-content and a glass transition temperature Tg in a range of from -95 to -105ºC. Suitable polybutadiene rubbers are available commercially, such as Budene® 1207 from Goodyear.

In one embodiment, a synthetic or natural polyisoprene rubber may be used.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. A Tg can be suitably determined as a peak midpoint by a differential scanning calorimeter (DSC) at a temperature rate of increase of 10ºC per minute.

The term "phr" as used herein, and according to conventional practice, refers to "parts by weight of a respective material per 100 parts by weight of rubber, or elastomer."

The rubber composition may also include processing oil. However, the epoxidized palm oil may partially or completely replace any usual amounts of processing oil. To the extent it is used, then, processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 100 phr of silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Various commercially available silicas may be used, such as silicas commercially available from PPG Industries under the Hi-Sil trademark with designations 210 and 243, silicas available from Rhodia, with, for example, designations of Z1165MP and Z165GR, and silicas available from Degussa AG with, for example, designations VN2 and VN3.

Commonly employed carbon blacks can be used as a conventional filler in an amount ranging from 10 to 100 phr. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm3/1 00 g.

Other fillers may be used in the rubber composition including, but not limited to, particulate fillers including ultra high molecular weight polyethylene (UHMWPE), crosslinked particulate polymer gels including but not limited to those disclosed in US-A- 6,242,534; US-A- 6,207,757; US-A- 6,133,364; US-A- 6,372,857; US-A-5,395,891; or US-A- 6,127,488, and plasticized starch composite filler including that disclosed in US-A- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula: 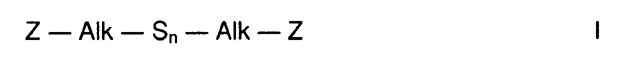 in which Z is selected from the group consisting of 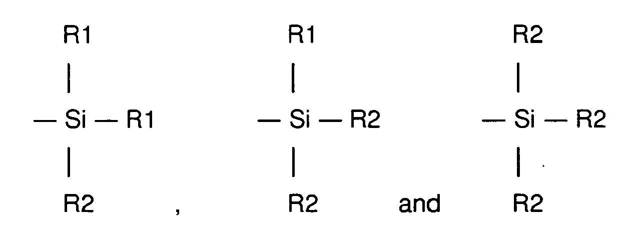 where R1 is an alkyl group of 1 to 4 carbon atoms, cyclohexyl or phenyl; R2 is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 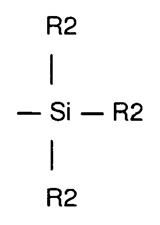 where R2 is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, zinc oxide, waxes, antioxidants and antiozonants and peptizing agents. Fatty acids in addition to those present in the epoxidized palm oil are preferably not added. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a bead wirecoat, apex, or sidewall veneer of the tire. A typical bead with skim coat, or wirecoat, is described for example in US-A- 6,120,911 and US-A- 6,966,351. A typical apex is described in US-A- 6,776,206. A typical sidewall veneer for a large tire is described for example in US-A- 6,223,796. In one embodiment, the component is a bead wirecoat.

The pneumatic tire of the present invention may be a race tire, passenger tire, aircraft tire, industrial, earthmover, off-the-road, or truck tire. The tire may also be a radial or bias.

In one embodiment, the tire is a large truck, industrial, or off-the-road type tire. In such large tires, maintaining good adhesion between components during tire build is important due to the large dimensions and high stresses experienced by the tire. To this end, a sufficient level of tack, or stickiness, of certain components such as the bead, apex, and any sidewall veneers is important to obtain good adhesion in the final tire. By large tire, it is meant that the tire size is at least a 24 inch wheel diameter. In one embodiment, then, the tire has a wheel diameter greater than 24 inches. In one embodiment, the tire has a wheel diameter greater than 30 inches. In one embodiment, the tire has a wheel diameter greater than 36 inches.

As is known in the art, bead wire is typically coated with a rubber compound before bundling the wire into a bead. To add cohesiveness between the bead wires and as an aid in providing tack to the bead, a fabric impregnated with an adhesive is sometimes wrapped around the bead, see for example US-A- 4,501,791; US-A-4,097,321; and US-A- 7,578,328 for examples of so-called bead wraps, methods for wrapping beads, and tires with bead wraps. In addition, in the splice area of the bead, that is, the area where the wire ends are exposed, it is sometimes necessary to wrap the bead with a bead wrap to secure the wire ends and prevent these wire ends from extending into the adjacent tire components. Such splice wraps are typically disposed within 3 cross-sectional dimensions of the splice (by cross-sectional dimensions, it is meant the maximum length in cross-section of the bead; for a round bead this would be the diameter). The use of such bead wraps adds complexity and cost to the tire building process; it is desirable to avoid using such wraps if possible. The use of an improved bead wirecoat compound may allow for the elimination of the bead wrap, except in the area of the splice. In one embodiment, then, the tire component is a bead with a bead wirecoat comprising the epoxidized palm oil.

Vulcanization of the pneumatic tire of the present invention is generally carried out at conventional temperatures ranging from 100°C to 200°C. Any of the usual vulcanization processes may be used such as heating in a press or mold, heating with superheated steam or hot air.

The invention is further illustrated by the following example.

### Example 1

In this example, a rubber composition including an epoxidized palm oil is illustrated. Rubber compounds were prepared following a multi-step mix procedure. The compounds had formulation as indicated in Table 1, with all amounts given in phr. The samples were tested for physical properties with results given in Table 2.

SBAT corresponds to ASTM D1871 Method 1.

Mooney viscosities (ML.sub. 1 +4 (100 ºC)) and Mooney scorch (t+5, T+20) were measured on a Flexsys MV2000.

Viscoelastic properties Tan Delta and G' were measured using an Alpha Technologies Rubber Process Analyzer (RPA). A description of the RPA 2000, its capability, sample preparation, tests and subtests can be found in these references. H A Pawlowski and J S Dick, Rubber World, June 1992; J S Dick and H A Pawlowski, Rubber World, January 1997; and J S Dick and J A Pawlowski, Rubber & Plastics News, Apr. 26 and May 10, 1993.

**Table 1**

| **Sample No.** | **1** | **2** | **3** |
|---|---|---|---|
| Elastomers | 100 | 100 | 100 |
| Carbon Black | 124 | 125 | 110 |
| Silica | 15.3 | 15 | 0 |
| Resins | 7.17 | 4 | 17.7 |
| Zinc Oxide | 5 | 5 | 4.5 |
| Sulfur | 5 | 4 | 4 |
| Accelerators | 1.57 | 1.7 | 1.5 |
| Rosin Oil | 20 | 0 | 0 |
| Naphthenic Oil | 0 | 25 | 0 |
| Epoxidized Palm Oil | 0 | 0 | 15 |
| Stearic Acid | 3 | 3 | 0 |

**Table 2**

| **Sample No.** | **1** | **2** | **3** |
|---|---|---|---|
| MV2000 Plasticity | | | |
| Test: @ 100°C, Rotor Type = Small | | | |
| Final Viscosity, Mooney Units | 68.6 | 56.8 | 54.4 |

| MV2000 SCORCH | | | |
|---|---|---|---|
| Test: @ 121 °C, Rotor Type = Small | | | |
| T+5, minutes | 23.9 | 5.6 | 16.6 |
| T+20, minutes | 45.2 | 55.0 | 19.3 |

| RPA2000 | | | |
|---|---|---|---|
| Test: @ 100°C, Frequency = 1 Hz, Strain Sweep = 1/2/5/10, Strain Sweep = 1/2/5/10/15/50 | | | |
| G' 1 %, MPa | 8.6 | 7.7 | 9.3 |
| G' 5%, MPa | 5.8 | 5.3 | 5.3 |
| G' 15%, M Pa | 4.6 | 4.1 | 3.6 |

| Cold Tensile DIN 53504 | | | |
|---|---|---|---|
| Cure: 74 min @ 160°C; Test: @ 23°C, Pulling Speed = 20 cm/min | | | |
| Elongation at Break, % | 115 | 106 | 177 |
| 100% Modulus, MPa | 12.6 | 12.7 | 7.5 |
| Tensile Strength, MPa | 14.6 | 13.4 | 14.5 |
| Shore D | 50 | 44 | 41 |

| SBAT-Bead Wire Adhesion | | | |
|---|---|---|---|
| Cure: 74 min @ 160°C; Test: @ 23°C .072" | | | |
| Pull Out Force, Original, N | 1894 | 1539 | 1092 |
| Pull Out Force, Aged 2 days at 121ºC, N | 588 | 447 | 904 |
| Pull Out Force, Aged 5 day at 121ºC, N | 499 | 189 | 321 |

### Example 2

In this example, the ability to retain tack by tire components made with the rubber composition including epoxidized palm oil is illustrated. The "tackiness" or tack of a rubber component is a relative indication of the ability of the component to adhere and remain adhered to other tire components during the tire building process. Some tire components, including beads, apexes, and sidewall veneers, are typically produced in advance of tire building and may be stored for several weeks before use.

Beads produced using compounds of Example 1 were stored up to three months and evaluated for tack. These evaluations showed that the beads produced using epoxidized palm oil according to the present invention had at least 50 percent superior tack retention as compared with the control beads.

Such tack may be measured by a technique described in the publication "Role of Phenolic Tackifiers in Polyisoprene Rubber," F. L. Magnus and G. R. Hamed, Rubber Chemistry and Technology, vol. 64, pages 65-73 (1991).

## Claims

1. A pneumatic tire comprising a bead, the bead comprising a rubber composition, the rubber composition comprising at least one diene based elastomer, an epoxidized palm oil and less than 1 phr of stearic acid.

2. The pneumatic tire of claim 1, wherein the epoxidized palm oil is derived from a palm oil comprising from 43 to 47 percent by weight of palmitic acid, from 38 to 42 percent by weight of oleic acid, from 8 to 12 percent by weight of linoleic acid, from 3 to 5 percent by weight of stearic acid, and from 0.5 to 1.5 percent by weight of myristic acid.

3. The pneumatic tire of claim 1 or 2, wherein the amount of epoxidized palm oil ranges from 1 to 20 phr.

4. The pneumatic tire of claim 3, wherein the amount of epoxidized palm oil ranges from 3 to 18 phr.

5. The pneumatic tire of claim 4, wherein the amount of epoxidized palm oil ranges from 5 to 15 phr.

6. The pneumatic tire of at least one of the previous claims, wherein the bead has a cross-sectional length, and the bead excludes a fabric bead wrap disposed beyond three cross-sectional lengths of a bead splice.

7. The pneumatic tire of at least one of the previous claims, wherein the rubber composition comprises less than 0.75 phr of stearic acid.

8. The pneumatic tire of claim 7, wherein the rubber composition comprises less than 0.5 phr of stearic acid.

9. The pneumatic tire of claim 7, wherein the rubber composition is free of stearic acid.

10. The pneumatic tire of at least one of the previous claims, wherein the epoxidized palm oil has 2.6 to 3.4 percent of epoxidation.

11. The pneumatic tire of claim 10, wherein the epoxidized palm oil has 2.6 to 3.4 percent of epoxidation.

12. The pneumatic tire of at least one of the previous claims, wherein the tire is sized for a wheel diameter of at least 24 inches.

13. The pneumatic tire of claim 12, wherein the tire is sized for a wheel diameter of at least 30 inches.

14. The pneumatic tire of claim 13, wherein the tire is sized for a wheel diameter of at least 36 inches.

## Patentansprüche

1. Luftreifen, umfassend einen Wulst, wobei der Wulst eine Kautschukzusammensetzung umfasst, wobei die Kautschukzusammensetzung mindestens ein dienbasiertes Elastomer, ein epoxidiertes Palmöl und weniger als 1 ThK Stearinsäure enthält.

2. Luftreifen nach Anspruch 1, wobei das epoxidierte Palmöl von einem Palmöl abgeleitet ist, das 43 bis 47 Gewichtsprozent Palmitinsäure, 38 bis 42 Gewichtsprozent Ölsäure, 8 bis 12 Gewichtsprozent Linolsäure, 3 bis 5 Gewichtsprozent Stearinsäure und 0,5 bis 1,5 Gewichtsprozent Myristinsäure enthält.

3. Luftreifen nach Anspruch 1 oder 2, wobei die Menge an epoxidiertem Palmöl sich auf 1 bis 20 ThK beläuft.

4. Luftreifen nach Anspruch 3, wobei die Menge an epoxidiertem Palmöl sich auf 3 bis 18 ThK beläuft.

5. Luftreifen nach Anspruch 4, wobei die Menge an epoxidiertem Palmöl sich auf 5 bis 15 ThK beläuft.

6. Luftreifen nach mindestens einem der vorgenannten Ansprüche, wobei der Wulst eine Querschnittslänge aufweist und der Wulst eine Gewebe-Wulstumwicklung, die über drei Querschnittslängen einer Wulstspleißstelle hinaus angeordnet ist, ausschließt.

7. Luftreifen nach mindestens einem der vorgenannten Ansprüche, wobei die Kautschukzusammensetzung weniger als 0,75 ThK Stearinsäure enthält.

8. Luftreifen nach Anspruch 7, wobei die Kautschukzusammensetzung weniger als 0,5 ThK Stearinsäure enthält.

9. Luftreifen nach Anspruch 7, wobei die Kautschukzusammensetzung frei von Stearinsäure ist.

10. Luftreifen nach mindestens einem der vorgenannten Ansprüche, wobei das epoxidierte Palmöl 2,6 bis 3,4 Prozent Epoxidierung aufweist.

11. Luftreifen nach Anspruch 10, wobei das epoxidierte Palmöl 2,6 bis 3,4 Prozent Epoxidierung aufweist.

12. Luftreifen nach mindestens einem der vorgenannten Ansprüche, wobei der Reifen für einen Raddurchmesser von mindestens 24 Zoll dimensioniert ist.

13. Luftreifen nach Anspruch 12, wobei der Reifen für einen Raddurchmesser von mindestens 30 Zoll dimensioniert ist.

14. Luftreifen nach Anspruch 13, wobei der Reifen für einen Raddurchmesser von mindestens 36 Zoll dimensioniert ist.

## Revendications

1. Bandage pneumatique comprenant un talon, le talon comprenant une composition de caoutchouc, la composition de caoutchouc comprenant au moins un élastomère à base diénique, une huile de palme époxydée et de l'acide stéarique à concurrence de moins de 1 phr.

2. Bandage pneumatique selon la revendications 1, dans lequel l'huile de palme époxydée dérive d'une huile de palme comprenant de l'acide palmitique à concurrence de 43 à 47 % en poids, de l'acide oléique à concurrence de 38 à 42 % en poids, de l'acide linoléique à concurrence de 8 à 12 % en poids, de l'acide stéarique à concurrence de 3 à 5 % en poids et de l'acide myristique à concurrence de 0,5 1,5 % en poids.

3. Bandage pneumatique selon la revendication 1 ou 2, dans lequel la quantité de l'huile de palme époxydée se situe dans la plage de 1 à 20 phr.

4. Bandage pneumatique selon la revendication 3, dans lequel la quantité de l'huile de palme époxydée se situe dans la plage de 3 à 18 phr.

5. Bandage pneumatique selon la revendication 4, dans lequel la quantité de l'huile de palme époxydée se situe dans la plage de 5 à 15 phr.

6. Bandage pneumatique selon au moins une des revendications précédentes, dans lequel le talon possède une longueur en section transversale et le talon exclut une enveloppe de talon en tissu disposée au-delà de trois longueurs en section transversale d'une épissure de talon.

7. Bandage pneumatique selon au moins une des revendications précédentes, dans lequel la composition de caoutchouc comprend de l'acide stéarique à concurrence de moins de 0,75 phr.

8. Bandage pneumatique selon la revendication 4, dans lequel la composition de caoutchouc comprend de l'acide stéarique à concurrence de moins de 0,5 phr.

9. Bandage pneumatique selon la revendication 4, dans lequel la composition de caoutchouc est exempte d'acide stéarique.

10. Bandage pneumatique selon au moins une des revendications précédentes, dans lequel l'huile de palme époxydée possède de 2,6 à 3,4 % d'époxydation.

11. Bandage pneumatique selon la revendication 10, dans lequel l'huile de palme époxydée possède de 2,6 à 3,4 % d'époxydation.

12. Bandage pneumatique selon au moins une des revendications précédentes, dans lequel le bandage pneumatique est dimensionné pour un diamètre de roue d'au moins 24 pouces.

13. Bandage pneumatique selon la revendication 12, dans lequel le bandage pneumatique est dimensionné pour un diamètre de roue d'au moins 30 pouces.

14. Bandage pneumatique selon la revendication 13, dans lequel le bandage pneumatique est dimensionné pour un diamètre de roue d'au moins 36 pouces.
